# EUROPEAN PATENT SPECIFICATION

(11) **EP 2 662 537 B1**
(45) Date of publication and mention of the grant of the patent: **24.10.2018**
(21) Application number: 13163590.6
(22) Date of filing: 12.04.2013
(51) Int. Cl.: F01D 25/16, F16C 27/04

(54) **Apparatus including a rotor group and method of damping vibration in such an apparatus**
Vorrichtung mit einer Rotorgruppe und Verfahren zum Dämpfen von Schwingungen in einer solchen Vorrichtung
Dispositif ayant un module de rotor et procédé pour amortir la vibration dans un tel dispositif

(30) Priority: 07.05.2012 US 201213465534
(43) Date of publication of application: 13.11.2013
(73) Proprietor: Honeywell International Inc., Morris Plains, NJ 07950 (US)
(72) Inventor: Alam, Mohsiul, Morristown, NJ 07962-2245 (US)
(74) Representative: Houghton, Mark Phillip

(56) References cited:
- US-A- 4 527 911
- US-A- 4 983 051
- US-B2- 6 682 219

## Description

### TECHNICAL FIELD

The present invention generally relates to apparatuses including a rotor group and methods of damping the apparatuses, and more particularly relates to apparatuses and methods in which the rotor group is damped through squeeze film damping.

### BACKGROUND

A gas turbine engine may be used to power various types of vehicles and systems. A particular type of gas turbine engine that may be used to power aircraft is a turbofan gas turbine engine. A turbofan gas turbine engine may include, for example, five major sections, a fan section, a compressor section, a combustor section, a turbine section, and an exhaust section. Each section includes rotating components that are coupled to a rotor. The rotating components may be coupled together either by a tie shaft or bolted flange joints to form a rotor group. Two or more bearing assemblies may be employed to support the rotor group. Generally, the bearing assemblies may be surrounded by a support housing, which may be connected to an engine case.

During engine operation and high-speed rotation of the rotor group, vibration may occur when the rotor group rotates. Typically, the vibration is caused by a rotating mass imbalance, or may occur when a radial deflection of the rotor results in tangential force normal to the deflection. For some rotor groups, this tangential force excites a fundamental mode of the rotor and creates a non-synchronous vibration (NSV). The magnitude of the tangential force increases with the deflection, resulting in high bearing loads that become unstable and cause damage to the gas turbine engine. A damping system is typically required in the engine to reduce vibration, especially around a critical speed of the rotor group, thereby minimizing bearing loads and safeguarding against potential damage to the bearing assemblies and supports that can be caused by the unstable vibration.

One example of a damping system that is known for use in gas turbine engines is a squeeze film damper. A squeeze film damper operates by supplying fluid (usually oil) into a squeeze film cavity formed via a clearance between the support housing and the bearing assemblies. The fluid in the squeeze film cavity is under pressure and damps vibration of the rotor through viscous resistance thereby exerting a damping force on the bearing assembly. Squeeze film dampers are particularly effective for damping synchronous vibration of the rotor group that occurs at the critical speed.

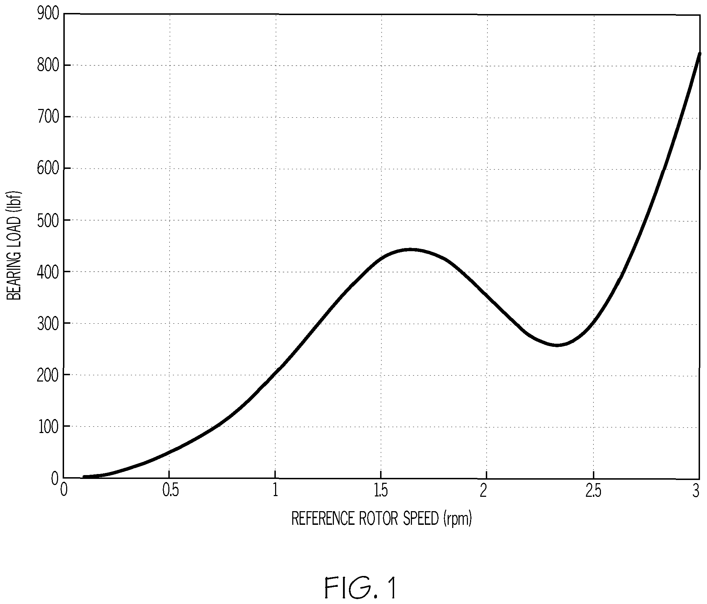

Although squeeze film dampers are relatively useful in reducing synchronous rotor vibration, they may suffer drawbacks. For example, squeeze film dampers are generally effective for damping rotor vibration at a critical speed of the rotor group, where vibration is greatest and where damping is most desired. The critical speed of the rotor group in gas turbine engines is generally relatively low within a range of rotational operating speeds of the gas turbine engines, and the critical speed of the rotor group is often traversed during normal operation of the gas turbine engines. The fluid in the squeeze film damper generally continues to be under pressure once the critical speed is traversed. However, once the critical speed is traversed, synchronous vibration is less than at critical speeds and the need for damping the synchronous vibrations is greatly reduced. Further, damping may even be undesirable once the critical speeds are traversed because the damping force exerted by the pressurized fluid in the squeeze film damper combines with elastic force to create excessively high bearing loads, which leads to excessive engine vibration. For example, as shown in FIG. 1, continued damping after traversing the critical speed, while initially decreasing an amplitude of bearing load, causes an increase in bearing load and attendant system vibration at higher rotational operating speeds of the rotor group. Many gas turbine engines that employ squeeze film dampers do not cut off a fluid flow to the squeeze film damper once the critical speed is traversed because cutting off the fluid flow to the squeeze film damper invites NSV, which causes the aforementioned problems.

Accordingly, it is desirable to provide apparatuses including a rotor group that can be damped to minimize bearing loads around a critical speed of the rotor group, but that also exhibits minimized bearing loads upon traversing the critical speed. In addition, it is desirable to provide methods of damping vibration in such apparatuses both around the critical speed of the rotor group and once the critical speed is traversed. Furthermore, other desirable features and characteristics of the present invention will become apparent from the subsequent detailed description of the invention and the appended claims, taken in conjunction with the accompanying drawings and this background of the invention.
United States Patent Publication No. US 6682219 describes a flexible anisotropic support with parallel recirculating squeeze film damper and a rotor centering feature.

### BRIEF SUMMARY

The present invention is defined by the appended claims. According to a first aspect of the invention there is provided an apparatus as defined in claim 1.

According to a second aspect of the invention there is provided a method of damping vibration in an apparatus as set forth in claim 5.

### BRIEF DESCRIPTION OF THE DRAWINGS

The present invention will hereinafter be described in conjunction with the following drawing figures, wherein like numerals denote like elements, and wherein:
FIG. 1 is a graph showing bearing loads, in pounds-force, as a function of rotational speed of a rotor group within an apparatus as shown in FIG. 2 when a squeeze film damper is employed with fluid in the squeeze film damper pressurized at all rotational speeds;
FIG. 2 is a partial cross-sectional side view of an apparatus including a rotor group, a bearing assembly, and a support structure including an anisotropic support in accordance with an exemplary embodiment;
FIG. 3 is a perspective view of the anisotropic support of FIG. 2; and
FIG. 4 is a graph showing bearing loads, in pounds-force, as a function of rotational speed of the rotor group within the apparatus as shown in FIG. 2 when a squeeze film damper is employed with fluid in the squeeze film damper interrupted once a rigid body critical speed of the rotor group is interrupted.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

Apparatus and methods of damping vibration in the apparatuses are provided herein. In particular, the apparatuses may be further defined as gas turbine engines and include a rotor group, a bearing assembly, and a support structure including a support housing, an anisotropic support, and a squeeze film cavity defined between the anisotropic support and the support housing. When filled with pressurized fluid, the squeeze film cavity functions as a squeeze film damper. The apparatuses and methods employ damping from both the squeeze film damper and the anisotropic support in a way that minimizes bearing loads both around a rigid body critical speed of the rotor group and once the rigid body critical speed is traversed to thereby minimize vibration of the apparatuses in a range of rotational operating speeds of the rotor group. In particular, fluid is supplied under pressure to the squeeze film cavity, and a fluid flow to the squeeze film cavity is interrupted upon surpassing a predetermined value of a variable that is correlated to rotational speed of the rotor group, representing traversal of the rigid body critical speed of the rotor group or a speed at which damping with the squeeze film damper begins to create increasing bearing load. Once the fluid flow to the squeeze film cavity is interrupted, the squeeze film damper effectively ceases damping, thereby reducing the vibration of the rotor group. However, there is a possibility of non-synchronous vibration (NSV) arising once hydraulic damping from the squeeze film damper is ceased. To dampen the NSV, the anisotropic support is present and provides cross-couple stiffness to protect the rotor group against tangential excitation that creates the NSV. In this manner, high bearing loads attributable to the squeeze film damper at rotational speeds above the rigid body critical speed are minimized, thereby minimizing vibration of the apparatus below vibration that would otherwise be experienced with continued damping by the squeeze film damper.

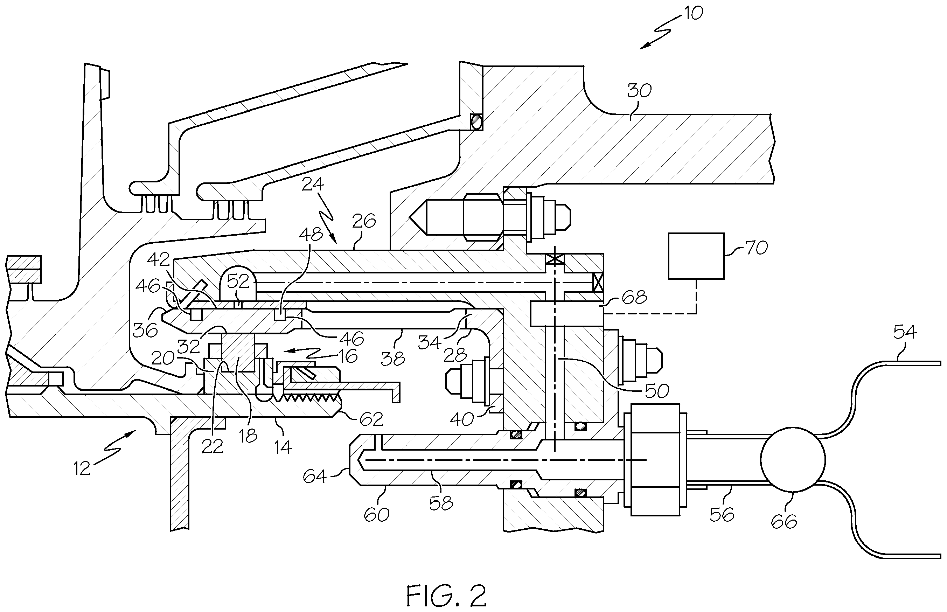

An exemplary embodiment of an apparatus 10 and a method of damping vibration in the apparatus 10 will now be addressed with reference to FIG. 2. As shown in FIG. 2, the apparatus 10 is a gas turbine engine, such as an engine of an aircraft. However, it is to be appreciated that the apparatuses described herein are not limited to gas turbine engines only and can include any apparatus 10 having a rotor that would benefit from damping of vibration at critical speeds and after traversing the critical speeds.

The apparatus 10 includes a rotor group 12 that is rotatable within the apparatus 10. The rotor group 12 refers to a rotor 14 and any rotatable features within the apparatus 10 that are fixed relative to the rotor 14. A bearing assembly 16 supports the rotor group 12 within the apparatus 10. In particular, the bearing assembly 16 engages the rotor 14 to support the rotor group 12. Although only a single bearing assembly 16 is shown in FIG. 2 for simplicity of illustration, it is to be appreciated that a plurality of bearing assemblies 16 may be included to support the rotor group 12. The bearing assembly 16 includes bearing elements 18 and an inner race 20 that is fixed on the rotor 14 and that provides a contact surface 22 for the bearing elements 18. The inner race 20 is also configured to confine the bearing elements 18 within the inner race 20.

A support structure 24 supports the bearing assembly 16 and is fixed in the apparatus 10, i.e., the support structure 24 does not rotate during operation of the apparatus 10. When the plurality of bearing assemblies 16 is included, each bearing assembly 16 may have its own corresponding support structure 24. The support structure 24 promotes axial rotation of the rotor 14, and by extension the rotor group 12, about an ideal axis during rotation of the rotor group 12 by supporting the rotor 14 through the bearing assembly 16. By promoting axial rotation of the rotor 14, vibration of the apparatus 10 is minimized that can result from rotation of the rotor 14 about an axis other than the ideal axis of rotation due to synchronous and non-synchronous vibration experienced by the rotor group 12. The support structure 24 includes a support housing 26. The support housing 26 is fixed to another non-rotating structure 30 of the apparatus 10 and is fixed to the non-rotating structure 30 of the apparatus 10, for example, through a flange and bolt connection.

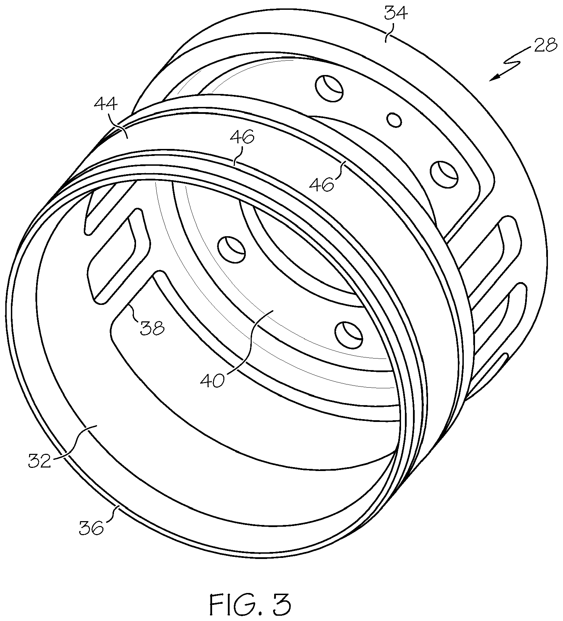

The support structure 24 further includes an anisotropic support 28 that engages the bearing assembly 16 and the support housing 26. In particular, the anisotropic support 28 engages the bearing elements 18 of the bearing assembly 16 and provides an outer race 32 that, in cooperation with the inner race 20, holds the bearing elements 18 in place. The anisotropic support 28 provides support anisotropy, or directionally-dependent, stiffness to the rotor 14 through directly engaging the bearing elements 18, and the anisotropic support 28 is effective for neutralizing non-synchronous vibration of the rotor group 12 during rotation. In the embodiment shown in FIG. 2, and as best shown in FIG. 3, the anisotropic support 28 includes at least two rings 34, 36 that are connected by asymmetrically-arranged beams 38, with the asymmetric arrangement of the beams 38 providing anisotropy to the anisotropic support 28. In this embodiment, one of the at least two rings 36 provides the outer race 32 on an inner surface thereof, and another of the at least two rings 34 provides an inner-circumferential attachment flange 40 for facilitating attachment of the anisotropic support 28 to the apparatus 10. In particular, the anisotropic support 28 can be bolted to the support housing 26 through the inner-circumferential attachment flange 40.

A squeeze film cavity 42 is defined between the anisotropic support 28 and the support housing 26 of the support structure 24. In particular, in the embodiment of FIG. 2, the squeeze film cavity 42 is defined between one of the at least two rings 36 of the anisotropic support 28, on an outer surface 44 thereof directly opposite the outer race 32, and the support housing 26. In an embodiment, the squeeze film cavity 42 extends circumferentially and continuously about the anisotropic support 28; however, it is to be appreciated that configurations are possible in which additional features (not shown) are designed into the squeeze film cavity 42 that interrupt continuous circumferential extension of the squeeze film cavity 42. As also shown in the embodiment of the apparatus 10 of FIG. 2 and the anisotropic support 28 of FIG. 3, the anisotropic support 28 includes two grooves 46 that receive piston rings 48, with the piston rings 48 further defining and sealing the squeeze film cavity 42.

A damper fluid supply line 50 is in fluid communication with the squeeze film cavity 42 for independently providing a fluid to the squeeze film cavity 42. In particular, the damper fluid supply line 50 provides fluid only to the squeeze film cavity 42 or, when the plurality of bearing assemblies 16 and corresponding support structures 24 are included, to each squeeze film cavity 42. In the embodiment of FIG. 2, the damper fluid supply line 50 is incorporated into the support housing 26 with a fluid inlet 52 to the squeeze film cavity 42 defined in the support housing 26 adjacent to the squeeze film cavity 42. However, in other examples (not shown), it is to be appreciated that a portion of the damper fluid supply line 50 may be disposed outside of the support housing 26.

In accordance with the method, fluid is supplied under pressure to the squeeze film cavity 42 through the damper fluid supply line 50. The squeeze film cavity 42, when filled with fluid under pressure, functions as a squeeze film damper and is effective for damping vibration of the rotor group 12 during rotation. In particular, the squeeze film damper is effective for damping synchronous vibration of the rotor group 12, especially at and around a critical speed of the rotor group 12 where synchronous vibration generally peaks. Suitable fluid for filling the squeeze film cavity 42 is not particularly limited and can be any fluid that is capable of flow under pressure, such as engine oil.

As shown in the embodiment of FIG. 2, a fluid reservoir 54 is in fluid communication with the damper fluid supply line 50 for providing the fluid to the damper fluid supply line 50. The fluid reservoir 54 may be a primary oil supply that collects, filters, and provides oil to various portions of the apparatus 10, in addition to providing oil to the damper fluid supply line 50. A main supply line 56 is disposed between and in fluid communication with the fluid reservoir 54 and the damper fluid supply line 50, and the damper fluid supply line 50 is split from the main supply line 56. The main supply line 56 supplies fluid to portions of the apparatus 10 beyond the damper fluid supply line 50, and can be directly attached to the fluid reservoir 54. In an embodiment, as shown in FIG. 2, a bearing fluid supply line 58 is further split from the main supply line 56 for independently providing the fluid to the bearing assembly 16. As also shown in FIG. 2, the main supply line 56 may be mounted to the support housing 26, such as through a flange and bolt connection, with the main supply line 56 including a fluid distributor 60 inserted through the support housing 26 and into a space 62 between the anisotropic support 28 and the rotor 14. In this embodiment, the damper fluid supply line 50 is split from the main supply line 56 in the fluid distributor 60, with the fluid distributor 60 and the support housing 26 having complementary portions of the damper fluid supply line 50 that align when the fluid distributor 60 is mounted to the support housing 26. The bearing fluid supply line 58 extends to a distal end 64 of the fluid distributor 60 that is inserted through the support housing 26 to provide fluid into the space 62 between the anisotropic support 28 and the rotor 14 thereby supplying fluid to the bearing elements 18.

In the embodiment, the fluid is supplied under pressure to the squeeze film cavity 42 by pressurizing the fluid in the main supply line 56. In this embodiment, a fluid pump 66 is disposed in fluid communication with the main supply line 56 for pressurizing the fluid in the main supply line 56. The fluid pump 66 thus pressurizes fluid in the main supply line 56 for supplying fluid under pressure to both the squeeze film cavity 42 through the damper fluid supply line 50 and the bearing elements 18 through the bearing fluid supply line 58. In an embodiment, the fluid pump 66 is operated to pressurize the fluid in the main supply line 56 in a range of from about 130 to about 850 KPa.

A fluid interruption device 68 is disposed in the damper fluid supply line 50, which enables a fluid flow to the squeeze film cavity 42 to be interrupted without interrupting a fluid flow to the bearing elements 18 or any other portion of the apparatus 10. As shown in the embodiment of FIG. 2, the fluid interruption device 68 is incorporated in the support housing 26 and is disposed in the damper fluid supply line 50 within the support housing 26, which provides design robustness and enables connections between the damper fluid supply line 50 and the fluid interruption device 68 to be reinforced. However, although not shown, it is to be appreciated that in other embodiments the fluid interruption device 68 may be disposed outside of the support housing 26. Suitable fluid interruption devices 68 include any device that is disposed in the damper fluid supply line 50 and that interrupts or disrupts the fluid flow to the squeeze film cavity 42. For example, as shown in FIG. 2, the fluid interruption device 68 may halt the fluid flow to the squeeze film cavity 42 to effectuate interruption of the fluid flow to the squeeze film cavity 42. Alternatively, although not shown, the fluid interruption device 68 may release pressure in the damper fluid supply line 50 to effectuate interruption of the fluid flow to the squeeze film damper. For example, the fluid interruption device 68 may reroute the fluid from the damper fluid supply line 50 to other locations within the apparatus 10 to relieve pressure in the damper fluid supply line 50. In an embodiment, the fluid interruption device 68 includes a pressure regulating valve 68 that functions to interrupt the fluid flow to the squeeze film cavity 42 through the influence of pressure on an internal piston (not shown). Alternatively, the fluid interruption device 68 may include a solenoid valve 68. In the embodiment shown in FIG. 2, the fluid interruption device 68 is controlled by an engine control system 70, with appropriate sensors (not shown) employed to measure variables based upon which a signal can be generated for the fluid interruption device 68 to interrupt the fluid flow to the squeeze film cavity 42. Alternatively, the fluid interruption device 68 may itself be designed to automatically interrupt the fluid flow to the squeeze film cavity 42 under certain conditions without the need for controlling by the engine control system 70.

In accordance with the method, the fluid flow to the squeeze film cavity 42 is interrupted with the fluid interruption device 68 upon surpassing a predetermined value of a variable that is correlated to rotational speed of the rotor group 12. However, a fluid flow to the bearing assembly 16 is uninterrupted when the fluid flow to the squeeze film cavity 42 is interrupted, thereby enabling fluid flow to continue to the bearing elements 18. In an example, the variable is further defined as fluid pressure in the damper fluid supply line 50, and the fluid flow to the squeeze film cavity 42 is interrupted by the fluid interruption device 68 upon surpassing a predetermined value of fluid pressure in the damper fluid supply line 50. In another example, the variable is further defined as the actual rotational speed of the rotor group 12, and the fluid flow to the squeeze film cavity 42 is interrupted by the fluid interruption device 68 upon surpassing a predetermined value of rotational speed of the rotor group 12. For example, because the squeeze film damper is most effective for damping synchronous vibration of the rotor group 12 that occurs at the rigid body critical speed, the predetermined value of the variable may correspond to a value of the variable at least at a critical speed of the rotor group 12. The fluid flow to the squeeze film cavity 42 is interrupted upon surpassing the predetermined value of the variable that is at least at the critical speed of the rotor group 12. Fluid pressure in the damper fluid supply line 50 can be directly correlated to rotational speed of the rotor group 12 for purposes of identifying rigid body critical speeds at which the fluid flow to the squeeze film cavity 42 is to be interrupted. In an example, the predetermined value of the variable corresponds to a value of the variable in a range of from a value of the variable at the critical speed of the rotor group 12 to a value of the variable at about 20 percent above the rigid body critical speed of the rotor group 12.

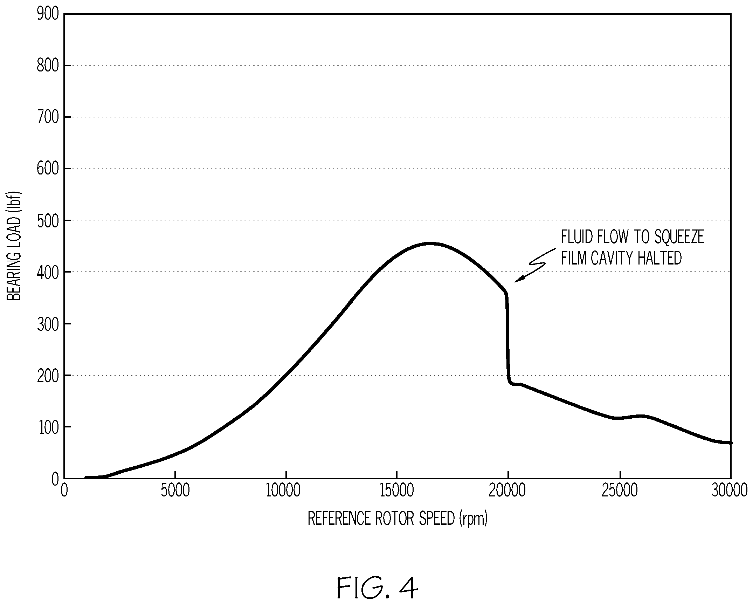

Referring to FIG. 4, simulated results are shown for bearing load when an apparatus 10 as shown in FIG. 2 is operated in accordance with the method described above. In particular, the simulated apparatus 10 is a gas turbine engine having a rigid body critical speed at about 16,000 rpm. Upon traversing the rigid body critical speed and reaching a speed of 20,000 rpm, the fluid flow to the squeeze film cavity 42 is halted, thereby resulting in significantly less bearing loads through the remaining range of operating rotational speeds of the rotor group 12. In particular, bearing loads are decreased by at least 30% upon interrupting the fluid flow to the squeeze film cavity 42, as compared to a simulation in which the fluid flow to the squeeze film cavity 42 is uninterrupted (as represented in FIG. 1).

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims. While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An apparatus (10) comprising:
a rotor group (12) that is rotatable within the apparatus;
a bearing assembly (16) that supports the rotor group;
a support structure (24) that supports the bearing assembly and that is fixed in the apparatus, wherein the support structure includes:
a support housing (26);
an anisotropic support (28) comprising at least two rings (34, 36) connected by asymmetrically-arranged beams (38) and engaging the bearing assembly and the support housing; and
a squeeze film cavity (42) defined between the anisotropic support and the support housing;
a damper fluid supply line (50) in fluid communication with the squeeze film cavity for independently providing a fluid to the squeeze film cavity;
a fluid reservoir (54) in fluid communication with the damper fluid supply line for providing the fluid to the damper fluid supply line; **characterised in that** the apparatus further comprises a main supply line (56) disposed between and in fluid communication with the fluid reservoir and the damper fluid supply line, and wherein the damper fluid supply line is split from the main supply line;
a bearing fluid supply line (58) further split from the main supply line for independently providing the fluid to the bearing assembly; and
a fluid interruption device (68) disposed in the damper fluid supply line and controlled by an engine control system (70) for interrupting a fluid flow to the squeeze film cavity, wherein a fluid flow to the bearing assembly is uninterrupted when the fluid flow to the squeeze film cavity is interrupted by the fluid interruption device.

2. The apparatus of claim 1 wherein the fluid interruption device (68) is configured to halt the fluid flow to the squeeze film cavity (42) upon surpassing a predetermined value of a variable correlated to rotational speed of the rotor group (12).

3. The apparatus of claim 1, wherein the fluid interruption device (68) comprises a pressure regulating valve.

4. The apparatus of claim 1, wherein the squeeze film cavity (42) is further defined between one of the at least two rings (34, 36) of the anisotropic support (28) and the support housing (26),

5. A method of damping vibration in an apparatus, the method comprising the steps of:
providing the apparatus (10) comprising a rotor group (12) that is rotatable within the apparatus, a bearing assembly (16) that supports the rotor group, a support structure (24) that supports the bearing assembly and that is fixed in the apparatus, wherein the support structure includes a support housing (26), an anisotropic support (28) engaging the bearing assembly and the support housing, and a squeeze film cavity (42) defined between the anisotropic support and the support housing, and wherein the apparatus further comprises a damper fluid supply line (50) in fluid communication with the squeeze film cavity for independently providing a fluid to the squeeze film cavity, a fluid reservoir (54) in fluid communication with the damper fluid supply line for providing the fluid to the damper fluid supply line, a main supply line (56) disposed between and in fluid communication with the fluid reservoir and the damper fluid supply line, and wherein the damper fluid supply line is split from the main supply line, a bearing fluid supply line (58) further split from the main supply line for independently providing the fluid to the bearing assembly, and a fluid interruption device (68) disposed in the damper fluid supply line;
supplying fluid under pressure to the squeeze film cavity through the damper fluid supply line, wherein supplying fluid under pressure to the squeeze film cavity comprises pressurizing the fluid in the main supply line; and
interrupting a fluid flow to the squeeze film cavity with the fluid interruption device (68) upon surpassing a predetermined value of a variable correlated to rotational speed of the rotor group, wherein a fluid flow to the bearing assembly is uninterrupted when the fluid flow to the squeeze film cavity is interrupted.

6. The method of claim 5, wherein the variable is further defined as fluid pressure in the damper fluid supply line (50), and wherein the fluid flow to the squeeze film cavity (42) is interrupted by the fluid interruption device (68) upon surpassing a predetermined value of fluid pressure in the damper fluid supply line.

7. The method of claim 5, wherein the variable is further defined as rotational speed of the rotor group (12), and wherein the fluid flow to the squeeze film cavity (42) is interrupted by the fluid interruption device (68) upon surpassing a predetermined value of rotational speed of the rotor group.

8. The method of claim 5, wherein the predetermined value of the variable corresponds to a value of the variable at least at a critical speed of the rotor group (12), and wherein the fluid flow to the squeeze film cavity (42) is interrupted upon surpassing the predetermined value of the variable that is at least at the critical speed of the rotor group.

9. The method of claim 8, wherein the predetermined value of the variable corresponds to a value of the variable in a range of from a value of the variable at the critical speed of the rotor group (12) to a value of the variable at 20 percent above a rigid body critical speed of the rotor group.

## Patentansprüche

1. Vorrichtung (10), umfassend:
eine Rotorgruppe (12), die in der Vorrichtung drehbar ist;
eine Lageranordnung (16), die die Rotorgruppe stützt;
eine Stützstruktur (24), die die Lageranordnung stützt und die in der Vorrichtung befestigt ist, wobei die Stützstruktur aufweist:
ein Stützgehäuse (26);
eine anisotrope Stütze (28), die wenigstens zwei Ringe (34, 36) umfasst, welche durch asymmetrisch angeordnete Träger (38) verbunden sind und mit der Lageranordnung und dem Stützgehäuse in Eingriff sind; und
einen Quetschfilmhohlraum (42), der zwischen der anisotropen Stütze und dem Stützgehäuse definiert ist;
eine Dämpferfluid-Zuführungsleitung (50) in Fluidverbindung mit dem Quetschfilmhohlraum, um unabhängig ein Fluid in den Quetschfilmhohlraum bereitzustellen;
ein Fluidreservoir (54) in Fluidverbindung mit der Dämpferfluid-Zuführungsleitung, um das Fluid an die Dämpferfluid-Zuführungsleitung bereitzustellen;
**dadurch gekennzeichnet, dass** die Vorrichtung ferner umfasst:
eine Hauptzuführungsleitung (56), die zwischen dem Fluidreservoir und der Dämpferfluid-Zuführungsleitung und in Fluidverbindung mit diesen angeordnet ist, und wobei die Dämpferfluid-Zuführungsleitung von der Hauptzuführungsleitung abgezweigt ist;
eine Lagerfluid-Zuführungsleitung (58), die ferner von der Hauptzuführungsleitung abgezweigt ist, um unabhängig das Fluid an die Lageranordnung bereitzustellen; und
eine Fluidunterbrechervorrichtung (68), die in der Dämpferfluid-Zuführungsleitung angeordnet ist und von einem Motorsteuerungssystem (70) gesteuert wird, um einen Fluidstrom zum Quetschfilmhohlraum zu unterbrechen, wobei ein Fluidstrom zur Lageranordnung nicht unterbrochen wird, wenn der Fluidstrom zum Quetschfilmhohlraum durch die Fluidunterbrechervorrichtung unterbrochen wird.

2. Vorrichtung nach Anspruch 1, wobei die Fluidunterbrechervorrichtung (68) dafür ausgelegt ist, den Fluidstrom zum Quetschfilmhohlraum (42) zu stoppen, wenn ein vorbestimmter Wert einer Variable, die mit der Drehzahl der Rotorgruppe (12) korreliert, überschritten wird.

3. Vorrichtung nach Anspruch 1, wobei die Fluidunterbrechervorrichtung (68) ein Druckreglerventil umfasst.

4. Vorrichtung nach Anspruch 1, wobei der Quetschfilmhohlraum (42) ferner zwischen einem der wenigstens zwei Ringe (34, 36) der anisotropen Stütze (28) und dem Stützgehäuse (26) definiert ist.

5. Verfahren zum Dämpfen von Schwingungen in einer Vorrichtung, wobei das Verfahren folgende Schritte umfasst:
Bereitstellen der Vorrichtung (10), umfassend eine Rotorgruppe (12), die in der Vorrichtung drehbar ist, eine Lageranordnung (16), die die Rotorgruppe stützt, eine Stützstruktur (24), die die Lageranordnung stützt und die in der Vorrichtung befestigt ist, wobei die Stützstruktur ein Stützgehäuse (26), eine anisotrope Stütze (28), die mit der Lageranordnung und dem Stützgehäuse in Eingriff ist, und einen Quetschfilmhohlraum (42), der zwischen der anisotropen Stütze und dem Stützgehäuse definiert ist, aufweist und wobei die Vorrichtung ferner umfasst: eine Dämpferfluid-Zuführungsleitung (50) in Fluidverbindung mit dem Quetschfilmhohlraum, um unabhängig ein Fluid in den Quetschfilmhohlraum bereitzustellen, ein Fluidreservoir (54) in Fluidverbindung mit der Dämpferfluid-Zuführungsleitung, um das Fluid an die Dämpferfluid-Zuführungsleitung bereitzustellen, eine Hauptzuführungsleitung (56), die zwischen dem Fluidreservoir und der Dämpferfluid-Zuführungsleitung und in Fluidverbindung mit diesen angeordnet ist, und wobei die Dämpferfluid-Zuführungsleitung von der Hauptzuführungsleitung abgezweigt ist, eine Lagerfluid-Zuführungsleitung (58), die ferner von der Hauptzuführungsleitung abgezweigt ist, um unabhängig das Fluid an die Lageranordnung bereitzustellen, und eine Fluidunterbrechervorrichtung (68), die in der Dämpferfluid-Zuführungsleitung angeordnet ist;
Zuführen eines unter Druck stehenden Fluids zum Quetschfilmhohlraum durch die Dämpferfluid-Zuführungsleitung, wobei das Zuführen des unter Druck stehenden Fluids zum Quetschfilmhohlraum umfasst, das Fluid in der Hauptzuführungsleitung mit Druck zu beaufschlagen; und
Unterbrechen eines Fluidstroms zum Quetschfilmhohlraum mit der Fluidunterbrechervorrichtung (68), wenn ein vorbestimmter Wert einer Variable, die mit der Drehzahl der Rotorgruppe korreliert, überschritten wird, wobei ein Fluidstrom zur Lageranordnung nicht unterbrochen wird, wenn der Fluidstrom zum Quetschfilmhohlraum unterbrochen wird.

6. Verfahren nach Anspruch 5,
wobei die Variable ferner als Fluiddruck in der Dämpferfluid-Zuführungsleitung (50) definiert ist und wobei der Fluidstrom zum Quetschfilmhohlraum (42) durch die Fluidunterbrechervorrichtung (68) unterbrochen wird, wenn ein vorbestimmter Fluiddruckwert in der Dämpferfluid-Zuführungsleitung überschritten wird.

7. Verfahren nach Anspruch 5,
wobei die Variable ferner als Drehzahl der Rotorgruppe (12) definiert ist und wobei der Fluidstrom zum Quetschfilmhohlraum (42) durch die Fluidunterbrechervorrichtung (68) unterbrochen wird, wenn ein vorbestimmter Drehzahlwert der Rotorgruppe überschritten wird.

8. Verfahren nach Anspruch 5,
wobei der vorbestimmte Wert der Variablen einem Wert der Variablen wenigstens bei einer kritischen Drehzahl der Rotorgruppe (12) entspricht und wobei der Fluidstrom zum Quetschfilmhohlraum (42) unterbrochen wird, wenn der vorbestimmte Wert der Variablen, der wenigstens bei der kritischen Drehzahl der Rotorgruppe liegt, überschritten wird.

9. Verfahren nach Anspruch 8,
wobei der vorbestimmte Wert der Variablen einem Wert der Variablen in einem Bereich von einem Wert der Variablen bei der kritischen Drehzahl der Rotorgruppe (12) bis zu einem Wert der Variablen bei 20 Prozent über einer kritischen Starrkörperdrehzahl der Rotorgruppe liegt.

## Revendications

1. Appareil (10) comprenant :
un groupe rotor (12) qui est rotatif à l'intérieur de l'appareil ;
un ensemble palier (16) qui supporte le groupe rotor ;
une structure de support (24) qui supporte l'ensemble palier et qui est fixée dans l'appareil, la structure de support comprenant :
un logement de support (26) ;
un support anisotrope (28) comprenant au moins deux anneaux (34, 36) connectés par des poutres disposées asymétriquement (38) et mettant en contact l'ensemble palier et le logement de support ; et
une cavité pour film de fluide (42) définie entre le support anisotrope et le logement de support ;
une conduite d'alimentation en fluide d'amortissement (50) en communication fluidique avec la cavité pour film de fluide pour apporter indépendamment un fluide dans la cavité pour film de fluide ;
un réservoir de fluide (54) en communication fluidique avec la conduite d'alimentation en fluide d'amortissement pour apporter le fluide à la conduite d'alimentation en fluide d'amortissement ;
l'appareil étant **caractérisé en ce qu'**il comprend en outre :
une conduite d'alimentation principale (56) disposée entre et en communication fluidique avec le réservoir de fluide et la conduite d'alimentation en fluide d'amortissement, et la conduite d'alimentation en fluide d'amortissement étant divisée à partir de la conduite d'alimentation principale ;
une conduite d'alimentation en fluide de palier (58) également divisée à partie de la conduite d'alimentation principale pour apporter indépendamment le fluide à l'ensemble palier ; et
un dispositif d'interruption de fluide (68) disposé dans la conduite d'alimentation en fluide d'amortissement et commandé par un système de commande de moteur (70) pour interrompre un écoulement de fluide vers la cavité pour film de fluide, un écoulement de fluide vers l'ensemble palier étant ininterrompu quand l'écoulement de fluide vers la cavité pour film de fluide est interrompu par le dispositif d'interruption de fluide.

2. Appareil selon la revendication 1, dans lequel le dispositif d'interruption de fluide (68) est configuré pour arrêter l'écoulement de fluide vers la cavité pour film de fluide (42) au dépassement d'une valeur prédéterminée d'une variable corrélée à une vitesse de rotation du groupe rotor (12).

3. Appareil selon la revendication 1, dans lequel le dispositif d'interruption de fluide (68) comprend une vanne de régulation de pression.

4. Appareil selon la revendication 1, dans lequel la cavité pour film de fluide (42) est en outre définie entre un des au moins deux anneaux (34, 36) du support anisotrope (28) et le logement de support (26).

5. Procédé d'amortissement de vibrations dans un appareil, le procédé comprenant les étapes consistant à :
fournir l'appareil (10) comprenant un groupe rotor (12) qui est rotatif à l'intérieur de l'appareil ; un ensemble palier (16) qui supporte le groupe rotor ; une structure de support (24) qui supporte l'ensemble palier et qui est fixée dans l'appareil, la structure de support comprenant un logement de support (26), un support anisotrope (28) mettant en contact l'ensemble palier et le logement de support, et une cavité pour film de fluide (42) définie entre le support anisotrope et le logement de support ; et l'appareil comprenant en outre une conduite d'alimentation en fluide d'amortissement (50) en communication fluidique avec la cavité pour film de fluide pour apporter indépendamment un fluide dans la cavité pour film de fluide ; un réservoir de fluide (54) en communication fluidique avec la conduite d'alimentation en fluide d'amortissement pour apporter le fluide à la conduite d'alimentation en fluide d'amortissement ; une conduite d'alimentation principale (56) disposée entre et en communication fluidique avec le réservoir de fluide et la conduite d'alimentation en fluide d'amortissement, et la conduite d'alimentation en fluide d'amortissement étant divisée à partir de la conduite d'alimentation principale ; une conduite d'alimentation en fluide de palier (58) également divisée à partie de la conduite d'alimentation principale pour apporter indépendamment le fluide à l'ensemble palier ; et un dispositif d'interruption de fluide (68) disposé dans la conduite d'alimentation en fluide d'amortissement ;
apporter un fluide sous pression dans la cavité pour film de fluide par l'intermédiaire de la conduite d'alimentation en fluide d'amortissement, l'apport d'un fluide sous pression dans la cavité pour film de fluide consistant à pressuriser le fluide dans la conduite d'alimentation principale ; et
interrompre un écoulement de fluide vers la cavité pour film de fluide avec le dispositif d'interruption de fluide (68) au dépassement d'une valeur prédéterminée d'une variable corrélée à une vitesse de rotation du groupe rotor, un écoulement de fluide vers l'ensemble palier étant ininterrompu quand l'écoulement de fluide vers la cavité pour film de fluide est interrompu.

6. Procédé selon la revendication 5, dans lequel la variable est en outre définie en tant que pression de fluide dans la conduite d'alimentation en fluide d'amortissement (50), et dans lequel l'écoulement de fluide vers la cavité pour film de fluide (42) est interrompu par le dispositif d'interruption de fluide (68) au dépassement d'une valeur prédéterminée de pression de fluide dans la conduite d'alimentation en fluide d'amortissement.

7. Procédé selon la revendication 5, dans lequel la variable est en outre définie en tant que vitesse de rotation du groupe rotor (12), et dans lequel l'écoulement de fluide vers la cavité pour film de fluide (42) est interrompu par le dispositif d'interruption de fluide (68) au dépassement d'une valeur prédéterminée de vitesse de rotation du groupe rotor.

8. Procédé selon la revendication 5, dans lequel la valeur prédéterminée de la variable correspond à une valeur de la variable au moins à une vitesse critique du groupe rotor (12), et dans lequel l'écoulement de fluide vers la cavité pour film de fluide (42) est interrompu au dépassement de la valeur prédéterminée de la variable qui est au moins à la vitesse critique du groupe rotor.

9. Procédé selon la revendication 8, dans lequel la valeur prédéterminée de la variable correspond à une valeur de la variable de l'ordre d'une valeur de la variable à la vitesse critique du groupe rotor (12) à une valeur de la variable à 20 pour cent au-dessus d'une vitesse critique de corps rigide du groupe rotor.
